# EUROPÄISCHE PATENTSCHRIFT

(11) **EP 0 754 611 B1**
(45) Veröffentlichungstag und Bekanntmachung des Hinweises auf die Patenterteilung: **11.04.2001**
(21) Anmeldenummer: 96109477.8
(22) Anmeldetag: 13.06.1996
(51) Int. Cl.: B60T 17/18, B62D 5/30, B62D 6/04, B62D 7/09, B60T 8/00, B60K 28/10

(54) **Brems- und Lenksystem für ein Fahrzeug**
Brake and steering system for a vehicle
Système de freinage et de direction pour un véhicule

(30) Priorität: 18.07.1995 DE 19526250
(43) Veröffentlichungstag der Anmeldung: 22.01.1997
(60) Teilanmeldung: 00102607.9
(73) Patentinhaber: DaimlerChrysler AG, 70567 Stuttgart (DE)
(72) Erfinder: Vogel, Thomas, Prof. Dr.-Ing., 71229 Leonberg (DE); Thurner, Thomas, 73230 Kirchheim/Teck (DE)

(56) Entgegenhaltungen:
- DE-A- 4 227 157
- GB-A- 2 205 009

## Beschreibung

Die Erfindung betrifft ein ein Fahrzeug nach dem Oberbegriff von Anspruch 1.

Fahrzeuge, die eine gelenkte Vorderachse und je einen getrennten Bremskreis für die Vorderachse und die Hinterachse aufweisen, sind allgemein bekannt.

Zum besseren Verständnis der nachfolgend verwendeten Begriffe werden zuerst einige Bergiffsdefinitionen, wie sie dieser Anmeldung zugrundegelegt werden, aufgeführt:
Fail-Safe-Eigenschaft: [Quelle DIN 19 250] Fähigkeit eines technischen Systems, beim Auftreten bestimmter Ausfälle im sicheren Zustand zu bleiben oder unmittelbar in einen anderen sicheren Zustand überzugehen; auch Fehlersicherheit genannt;
Fehler [DIN 19 250]: Nichterfüllung mindestens einer Anforderung an ein erforderliches Merkmal einer Betrachtungseinheit;
Fehlertoleranz: [NTG 3004; Nachrichtentechnische Gesellschaft im VDE (heute ITG, Informationstechnische Gesellschaft), Zuverlässigkeitsbegriffe im Hinblick auf komplexe Software und Hardware, 1982] Fähigkeit eines Systems, auch mit einer begrenzten Zahl fehlerhafter Subsysteme seine spezifizierte Funktion zu erfüllen;
Redundanz: [VDI/VDE 3542; Sicherheitstechnische Begriffe für Automatisierungsysteme, 1991] Vorhandensein von mehr als für die Ausführung der vorgesehenen Aufgaben an sich notwendigen Mitteln.
Fail-silent: Die Eigenschaft einer Komponente bzw. eines Systems, welche(s) mit anderen in Kommunikation steht, beim Erkennen eines Fehlers innerhalb der Komponente bzw. innerhalb des Systems keine weiteren Informationen auszusenden.

Zusätzlich zu den allgemein bekannten Fahrzeugen ist es aus der DE 43 34 260 A1 bekannt, ein Antiblockiersystem und ein Servolenkungssystem dadurch fehlersicher zu gestalten, daß die Steuereinheit des einen Systems die Funktion des jeweils anderen Systems überwacht und beim Auftreten eines Fehlers in einem der Systeme dasselbe System abschaltet, sobald dies gefahrlos möglich ist. Dabei besteht immer eine durchgängige mechanische bzw. hydraulische Verbindung zwischen der Betriebsbremse an den einzelnen Rädern - meist eine Scheibenbremse mit einem hydraulisch beaufschlagten Radbremszylinder - und dem vom Fahrer willkürlich betätigbaren Bremspedal bzw. zwischen dem Lenkgestänge und dem vom Fahrer willkürlich betätigbaren Lenkrad. Diese mechanische Verbindung stellt im Falle des Auftretens eines Fehlers im Antiblockiersystem bzw. in der Servolenkung die Fehlersicherheit des Gesamtsystems her. Beim Auftreten eines Fehlers im Antiblockiersystem, kann unter Verzicht der Funktion des Antiblockiersystems weiterhin gebremst werden. Tritt ein Fehler in der Unterstützung durch die Servolenkung auf, so muß der Fahrer zwar entsprechend höhere Lenkkräfte aufbringen, das Fahrzeug bleibt jedoch zumindest eingeschränkt fahrbar.

Ferner geht es aus der WO-A-94/26558 hervor, zur Erhöhung der Zuverlässigkeit der Datenübertragung zwischen zwei Steuergeräten, den diese Steuergeräte verbindenden Datenbus redundant - im gegebenen Fall mindestens zweifach - auszuführen.

Bei einem in der Patentschrift US 5.351.776 offenbarten elektronischen System für Motorfahrzeuge ist eine hierarchische Baumstruktur für die verschiedenen elektrischen Steuerungsfunktionen im Fahrzeug vorgesehen, wobei z.B. Lenkung, Längsbewegungssteuerung und fahrzeugkarosseriebezogene Steuerungsfunktionen in einer obersten Ebene liegen, an die sich die beiden Komponenten der Längsbewegungssteuerung, Antrieb und Eremsen, in einer darunter liegenden Ebene anschließen, auf die wiederum eine Ebene mit den Antriebssteuerungsfunktionen für den Motor und das Getriebe folgt. Eine unterste Ebene wird von den einzelnen Motorsteuerungsmaßnahmen, wie Luftansaugung, Einspritzung und Zündung gebildet. Die Systemauslegung ist so gewählt, daß der Steuerbefehlsfluß zwischen den verschiedenen hierarchischen Ebenen nur in einer Richtung erfolgt und von jeder Ebene wenigstens ein Element hierarchisch nach oben an eine vom Fahrer zur Eingabe seiner Steuerungsanforderungen betätigbare Bedienoberfläche angekoppelt ist und je nach vom Fahrer gewünschter Steuerungsfunktion die hierarchisch nachfolgenden Elemente ansteuert.

Aufgabe der Erfindung ist es, ein Fahrzeug mit zumindest fehlertolerantem Brems- und Lenksystem zu schaffen, bei dem gegebenenfalls weder eine durchgehende mechanische Verbindung zwischen dem vom Fahrer betätigbaren Lenkrad und den gelenkten Rädern noch eine durchgehende mechanische und/oder hydraulische Verbindung zwischen dem vom Fahrer betätigbaren Bremspedal und der Betriebsbremse für die Räder besteht.

Insbesondere soll diese Aufgabe so gelöst werden, daß die Fehlertoleranz des Gesamtsystems bei einer möglichst geringen Redundanz der einzelnen Elemente des Systems, inbesondere der aufwendigen Stellsysteme, erreicht wird.

Diese Aufgabe wird bei einem gattungsgemäßen Fahrzeug erfindungsgemäß mit den kennzeichnenden Merkmalen des Anspruchs 1 gelöst, wobei die Merkmale der Unteransprüche vorteilhafte Aus- und Weiterbildungen kennzeichnen.

Das Fahrzeug mit mindestens zwei Fahrzeugachsen, wobei an jeder Achse für jedes Rad eine Bremsfunktion und an zumindest einer Achse eine Lenkfunktion durchgeführt wird, weist eine fehlertolerante - vorzugsweise redundante - Recheneinheit auf. In der Recheneinheit wird zumindest für jedes Rad eine Sollbremswirkung und für jedes Rad mit Lenkfunktion eine Sollenkwirkung aufgrund von Sensorsignalen ermittelt. Die Bremsfunktion und die Lenkfunktion für die Räder wird aufgrund der ermittelten Sollbremswirkung und Sollenkwirkung mittels Stellsystemen geregelt bzw. gesteuert. Dabei beinhaltet das Stellsystem für die Bremsfunktion eine Betriebsbremse und für die Lenkfunktion zusätzlich einen Lenksteller. Eine fehlertolerante Kommunikationseinrichtung verbindet die Stellsysteme mit der Recheneinheit. Die Energieversorgung der Recheneinheit und der Stellsysteme ist fehlertolerant ausgebildet.

Die Bezeichnungen 'Achse' und 'Räder einer Achse' werden dabei dahingehend verwendet, daß damit die paarweise Anordnung von Rädern auf gegenüberliegenden Seiten das Fahrzeugs bezeichnet ist. Es ist nicht notwendigerweise so, daß eine durchgehende Achse (Starrachse) im herkömmlich mechanischen Sinn auch tatsächlich vorhanden ist. Es kann sich vielmehr auch um einzeln aufgehängte Räder handeln, die vollständig unabhängig voneinander sind. Die Bezeichnung Sollenkwirkung umfaßt dabei auch den Sollenkwinkel 0°, also die Geradeausfahrt und die Bezeichnung Sollbremswirkung die Sollbremswirkung '0', also verzögerungsfreies Fahren.

Somit genügt es, die Recheneinheit, die Kommunikationseinrichtung und die Energieversorgung fehlertolerant auszubilden, um das Gesamtsystem, das darüber hinaus zumindest die Stellsysteme für die Lenkfunktion und für die Bremsfunktion umfaßt, fehlertolerant zu gestalten.

Die konventionelle Bremsmechanik/-hydraulik und die konventionelle Lenkmechanik können wegfallen, ohne daß die Fehlertoleranz des Gesamtsystems beeinträchtigt wird. Zumindest die Bremsfunktion und die Lenkfunktion ist rein elektrisch gesteuert bzw. geregelt, so daß die Verwendung von Fahrerassistenzsystemen, wie Antiblockiersystemen, Antriebsschlupfregelungen und wie Systeme, die über entsprechende Ansteuerung der Bremsfunktion und der Lenkfunktion das Gierverhalten des Fahrzeugs stabilisieren und somit ein Schleudern des Fahrzeugs verhindern, durch einfaches Implementieren entsprechender Programme in der Recheneinheit umgesetzt werden kann. Ferner erhält man bei der Konstruktion des Fahrzeugs größere Freiheiten, so daß beispielsweise der Schutz der Insassen verbessert, die Zahl der Varianten des Fahrzeugs verringert (Rechts- und Linkslenker-Fahrzeuge unterscheiden sich nur noch durch die Anordnung von Lenkrad und Pedalerie im Fahrzeug aber nicht mehr durch die Anordnung der Stellsysteme für die Bremsfunktion und die Lenkfunktion) und die Konstruktion von Motorraum und Hinterachse vereinfacht werden kann.

Zweckmäßige Ausgestaltungen der Erfindung können den Unteransprüchen entnommen werden. Dabei betreffen die Ansprüche 2 bis 4 mögliche Zuordnungen der Lenksteller zu den Rädern, die Ansprüche 5 bis 7 die mögliche Zuordnungen der Betriebsbremse zu den Rädern und die Ansprüche 8 und 9 besonders geeignete Kombinationen der Zuordnungen von Betriebsbremse und Lenkstellern zu den Rädern.

Besonders angepaßte Ausbildungen der Energieversorgung sind in den Ansprüchen 10 bis 14 dargelegt. Die Ansprüche 15 bis 18 betreffen weitere Systeme, die in gleicher Weise mit der Recheneinheit verbunden sein können und deren Funktion (aktive oder teilaktive Federung, Antrieb) auch in Abhängigkeit von in der Recheneinheit ermittelten Sollwerten gesteuert bzw. geregelt ist. Eine Anordnung in Modulbauweise ist in den Ansprüchen 19 und 20 dargelegt. Die Ansprüche 21 bis 23 betreffen Ausbildungen eines fehlertoleranten Kommunikationssystems in Form von Datenbussen. Die Ansprüche 24 und 25 betreffen die Ausbildung einer fehlertoleranten Recheneinheit, die aus unabhängig voneinander arbeitenden Rechenwerken gebildet wird.

Im übrigen ist die Erfindung an Hand eines in der Zeichnung dargestellten Ausführungsbeispieles nachfolgend noch erläutert; dabei zeigen:
- Fig. 1a-1e: Beispiele unterschiedlicher Konfigurationen der Anordnung der Stellsysteme für die Bremsfunktion und der Lenksteller am Beispiel eines zweiachsigen Fahrzeugs,
- Fig. 2: eine schematische Darstellung eines Brems- und Lenksystems und
- Fig. 3: eine schematische Darstellung eines einem Rad zugeordneten Modul, das die Stellsysteme für dieses Rad umfaßt.

In den Figuren la bis le sind unterschiedliche Konfigurationen der Wirkverbindung zwischen den Stellsystemen für die Bremsfunktion und für die Lenkfunktion schematisch dargestellt. Mögliche Anordnungen der Antriebseinrichtungen und der Federsteller einer aktiven oder teilaktiven Federung wurden dabei der übersichtlichkeit wegen ebenso nicht berücksichtigt wie das fehlertolerante Kommunikationssystem, die fehlertolerante Recheneinheit und die fehlertolerante Energieversorgung. Dabei ist die vordere Fahrzeugachse mit A1, die hintere Fahrzeugachse mit A2 bezeichnet, während die Räder mit dem Buchstaben R und daran angehängt den Buchstaben 'v' oder 'h' für vorne bzw. hinten und 'l' oder 'r' für links bzw. rechts bezeichnet sind. Die Stellsysteme für die Lenkfunktion sind schematisch als Kästchen mit dem Buchstaben L, die Stellsysteme für die Bremsfunktion sind schematisch als Kästchen mit dem Buchstaben B dargestellt. Sofern ein Stellsystem nur auf ein Rad einwirkt, wurde es direkt neben dem entsprechenden Rad angeordnet und der Buchstabe 'r' wird an seine Bezeichnung angehängt. Wirkt ein Stellsystem für die Lenkfunktion auf beide Räder einer Achse ein, so wurde es in der Mitte zwischen den beiden Rädern dargestellt, ein Pfeil weist auf die beiden Räder und an seine Bezeichnung wird der Buchstabe 'a' angehängt. Bei der Bremsfunktion ist es möglich einen Bremssteller für eine Achse anzuordnen, der jeweils eine Bremsfunktion für beide Räder der Achse ausführt, wobei die beiden Bremsfunktionen in einen funktionalen Zusammenhang zueinander stehen. Derartigen Bremsstellern wird ebenfalls der Buchstabe 'a' an seine Bezeichnung angehängt. Der funktionale Zusammenhang zwischen den Bremsfunktionen kann insbesondere darin bestehen, daß die Radbremsen mit einer gemeinsamen Bremsdruckquelle verbunden sind. Durch Steuerventile kann zwar der Bremsdruck in den Rädern gegenüber dem Bremsdruck in der Druckquelle verringert werden, jedoch ist der Bremsdruck beider durch den in der Druckquelle momentan bereitstehenden Bremsdruck begrenzt. Im übrigen wird zur Unterscheidung der Stellsysteme noch eine Nummer angehängt.

In der Fig. la weist das Fahrzeug an der Vorderachse A1 einen Bremssteller Ba1 für die Achse und zwei unabhängig voneinander arbeitende Lenksteller Lr1, Lr2, die je ein Rad der Vorderachse A1 beaufschlagen, auf. An der Hinterachse A2 ist nur ein Bremssteller für die Achse Ba2 angeordnet. Bei einer solchen Anordnung wird das Fahrzeug an nur einer Achse gebremst, wenn an einem der Bremssteller Ba1, Ba2 ein Fehler auftritt. Tritt an einem der Lenksteller Lr1, Lr2 ein Fehler auf, so wird das andere Rad der Vorderachse A1 noch gelenkt. Vorzugsweise ist dabei durch konstruktive Maßnahmen sicherzustellen, daß beim Auftreten eines Fehler die betroffene Betriebsbremse bzw. der betroffene Lenksteller freigeschaltet ist. Aufgrund des an allen Achsen bestehenden funktionalen Zusammenhangs zwischen der Bremsfunktion an den Rädern der Achsen ist es nicht oder nur eingeschränkt möglich, durch gezieltes Bremsen einzelner Räder Giermomente zu erzeugen um so beim Auftreten eines Fehlers in einem der Lenksteller weiterhin eine Lenkbarkeit aufrechtzuerhalten. Deshalb ist bei einer solchen Anordnung die Weiterfahrt des Fahrzeugs allenfalls bei eingeschränkten Fahrgeschwindigkeiten (beispielsweise auf maximal 30 km/h) möglich. Es ist jedoch auf jeden Fall sichergestellt, daß das Fahrzeug nach dem Auftreten eines Fehlers vom Fahrer beherschbar angehalten werden kann.

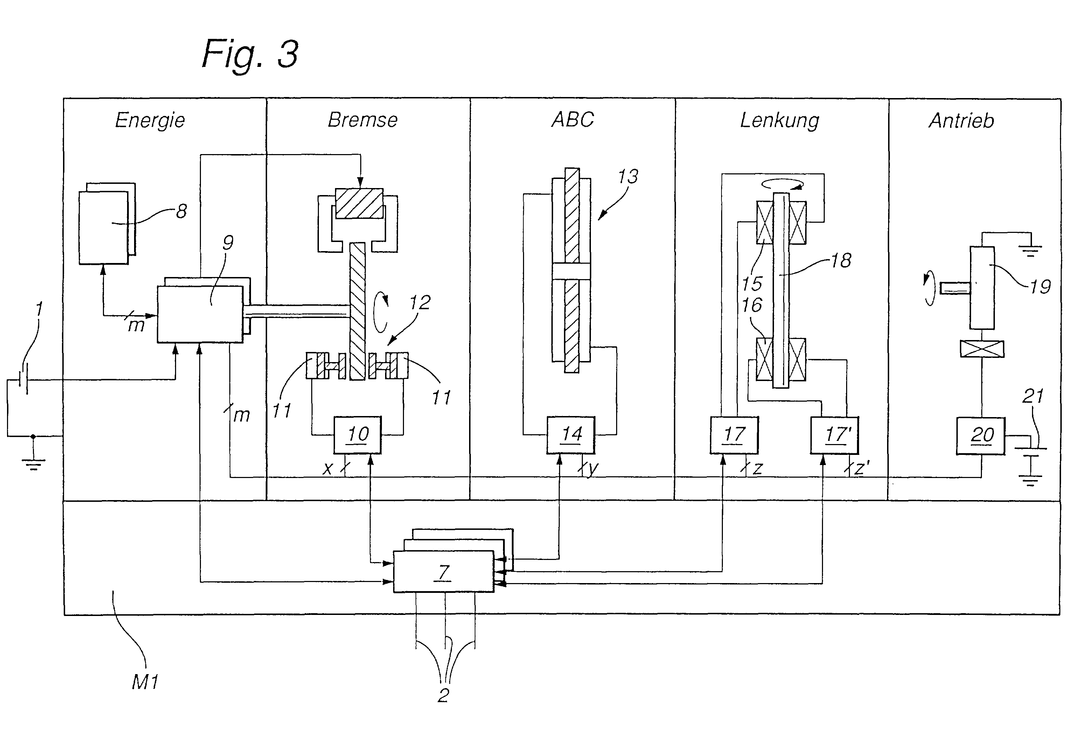

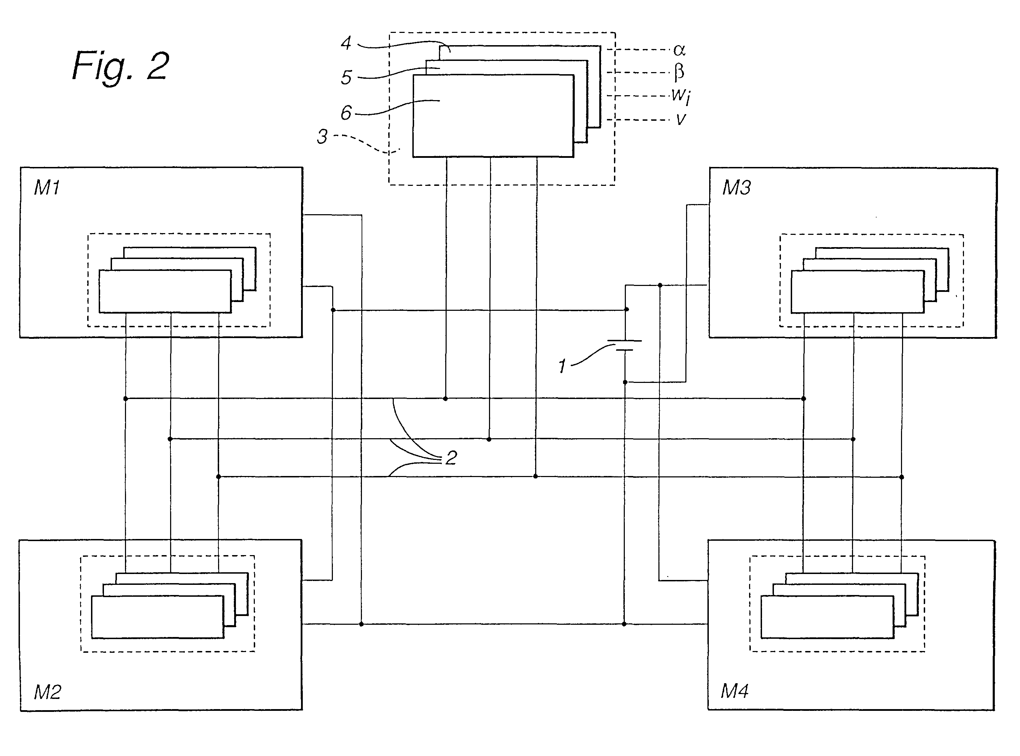

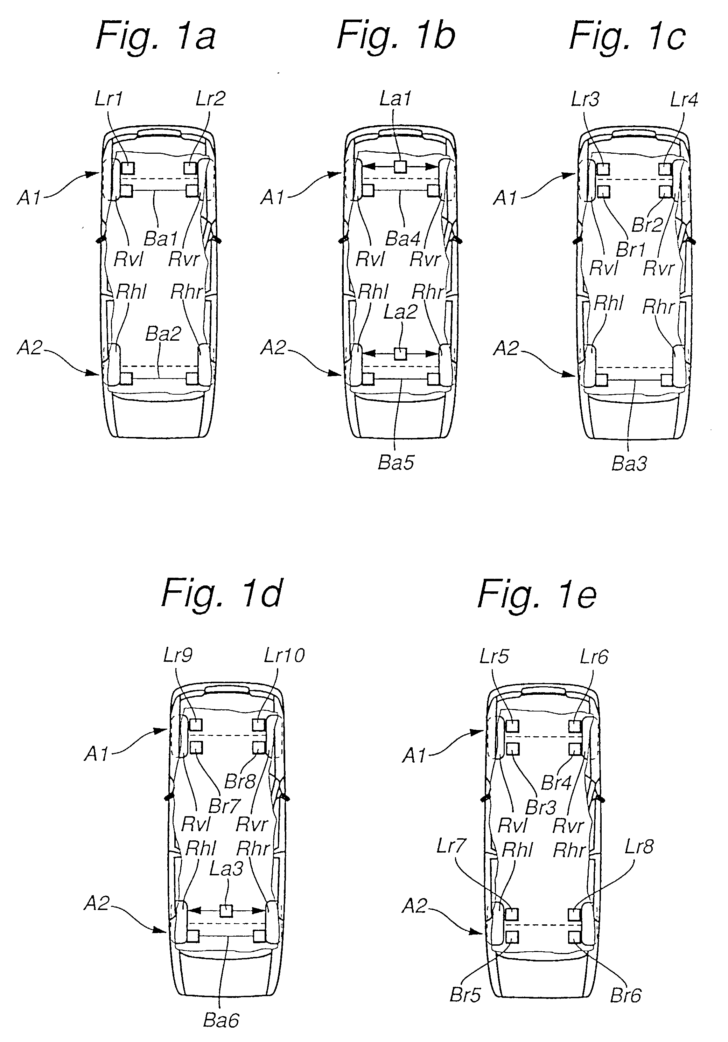

Die Anordnung gemäß der Fig. 1b unterscheidet sich von der Anordnung gemäß der Fig. la dadurch, daß die Lenkfunktion nicht nur an der Vorderachse A1 sondern auch an der Hinterachse A2 durchgeführt wird. Die Lenkfunktion jeder Achse wird dabei durch je einen Lenksteller La1, La2 durchgeführt, wobei jeder der Lenksteller auf beide Räder der entsprechenden Achse einwirkt. Beim Auftreten eines Fehlers in einem der Bremssteller Ba4, Ba5, ist das Fahrzeug noch durch den anderen Bremssteller abbremsbar. Der Vorteil dieser Anordnung ist darin zu sehen, daß beide Fahrzeugachsen unabhängig voneinander gelenkt sind. Tritt ein Fehler in einem der Lenksteller auf, so ist noch immer eine der Fahrzeugachsen gelenkt. In der Recheneinheit muß dies zwar entsprechend berücksichtigt werden, das Fahrzeug bleibt jedoch fahrbar. Diese Anordnung ist somit in Bezug auf das Auftreten eines Fehlers in einem der Lenkstellers fehlertolerant.

Die Anordnung der Fig. 1c unterscheidet sich dadurch von der Anordnung gemäß der Figur la, daß anstelle des Bremsstellers Bal, der an beiden Rädern der Vorderachse A1 eine in einem funktionalen Zusammenhang stehende Bremsfunktion ausführt, zwei jeweils auf nur ein Rad der Achse einwirkende, unabhängig voneinander arbeitende Bremssteller Br1, Br2 verwendet werden. Beim Auftreten eines Fehlers in dem Bremssteller Ba3 an der Hinterachse A2 des Fahrzeugs wird das Fahrzeug noch über die Vorderachse gebremst. Beim Auftreten eines Fehlers an einem der Bremssteller Br1, Br2 der Vorderachse A1 ist das Fahrzeug noch durch den verbleibenden der beiden Bremssteller Br1, Br2 an der Vorderachse A1 und durch den Bremssteller Ba3 an der Hinterachse bremsbar. Da gegebenenfalls an der Vorderachse nur einseitig gebremst wird, tritt ein Giermoment auf, das ein Drehen des Fahrzeugs um die Hochachse in der Richtung auf die Seite, an der das noch gebremste Vorderrad Rvr oder Rv1 zur Folge hat. Dies kann jedoch durch Vorgabe einer entsprechenden Sollenkwirkung kompensiert werden. Beim Auftreten eines Fehlers in einem der beiden Lenksteller Lr3, Lr4 kann in vorteilhafter Weise durch Vorgabe unterschiedlicher Sollbremswirkungen für die Bremssteller Brl, Br2 ein Giermoment erzeugt werden. Somit kann zumindest teilweise, durch gezieltes einseitiges Bremsen das aufgrund des Fehlers in einem der Lenksteller Lr3, Lr4 fehlende Lenkmoment kompensiert werden. Somit wird eine verbesserte Handhabung des Fahrzeugs beim Auftreten eines Fehlers in einem der Lenksteller Lr3, Lr4 erreicht. Somit kann nach dem Auftreten eines Fehlers in einem Lenksteller ein größerer Geschwindigkeitsbereich für die weitere Nutzung des Fahrzeugs verwendet werden. Einzig das Auftreten eines Fehlers, der gleichzeitig ein Bremssteller und ein Lenksteller betrifft, ist so schwerwiegend, daß es sich empfiehlt, als sicheren Zustand nach dem Auftreten des Fehlers den Fahrzeustillstand anzustreben. Ein Anhalten des Fahrzeugs ist jedoch in jedem Fall noch möglich, ohne daß an den Fahrer besondere Anforderungen gestellt werden müssen. Eine Weiterfahrt ist dann auch bei eingeschränkter Fahrzeuggeschwindigkeit nicht sehr empfehlenswert, obwohl dies prinzipiell dennoch möglich wäre.

Die Anordnung gemäß der Fig 1d unterscheidet sich von der Anordnung gemäß der Fig 1c nur darin, daß zusätzlich an der Hinterachse A2 eine Lenkfunktion mittels des auf beide Räder einwirkenden Lenkstellers La3 durchgeführt wird. Somit ist sichergestellt, daß beim Auftreten eines Fehlers in einem der Lenksteller Lr9, Lr10, La3 eine uneingeschränkte Lenkfunktion an einer Fahrzeugachse durchführbar ist. Das Fahrzeug ist auch bezüglich des Auftretens von Fehlern, die zwei der Lenksteller Lr9, Lr10, La3 betreffen, fehlersicher. Spätestens in diesem Fall muß durch Vorgabe von Sollbremswirkungen gezieltes, einseitiges Bremsen an den Bremsstellern Br7, Br8 erfolgen, um ein Giermoment am Fahrzeug zu erzeugen und so das fehlende Lenkmoment zu kompensieren. Das Verhalten des Fahrzeugs beim Auftreten eines Fehlers in einem der Bremssteller Br7, Br8, Ba6 ist analog zu dem beim Auftreten des gleichen Fehlers in der Fig 1c beschriebenen. Beim Auftreten von Fehlern in zwei Stellsystemen, von denen eines einer der Bremssteller Br7, Br8, Ba6 und der andere einer der Lenksteller Lr9, Lr10, La3 ist, kann das Fahrzeug weiterhin betrieben werden. Im Gegensatz zu der Anordnung gemäß der Fig. 1c ist das Anhalten des Fahrzeugs als anzustrebender sicherer Zustand nicht erforderlich. Zumindest in einem eingeschränkten Geschwindigkeitsbeich ist dann noch die volle Fahrfähigkeit gegeben. Somit ist das Brems- und Lenksystem gemäß dieser Anordnung fehlertolerant gegenüber dem Auftreten eines Fehlers in einem beliebigen Stellsystem und zumindest fehlersicher gegenüber dem Auftreten von Fehlern in zwei beliebigen Stellsystemen.

Den größten Grad der Fehlertoleranz bzw. Fehlersicherheit gegenüber dem Auftreten von Fehlern in mehreren Stellsystemen weist die Anordnung gemäß der Fig. 1e auf. Hierbei ist an jedem Rad ein Lenksteller Lr5, Lr6, Lr7, Lr8 und ein Bremssteller Br3, Br4, Br5, Br6 angeordnet, die jeweils unabhängig von auf andere Räder einwirkenden Stellsystemen arbeiten. Fehlertoleranz ist bis zum Auftreten von Fehlern in zwei beliebigen Stellsystemen gegeben. Beim Auftreten von Fehlern in drei Stellsystemen ist dann noch ein uneingeschränkter Fahrbetrieb möglich, wenn mindestens ein Lenksteller und mindestens 1 Bremssteller ausgefallen, d. h. von einem Fehler betroffen ist. Treten Fehler auf, die drei Lenksteller oder drei Bremssteller betreffen, ist das Fahrzeug bis zum Stillstand sicher abbremsbar. Eine Weiterfahrt mit dem Fahrzeug sollte dann jedoch vermieden werden.

Die Anordnungen der Figuren 1a, 1c und 1d sind gegenüber dem Austauschen von Vorderachse und Hinterachse nicht symmetrisch. Selbstverständlich weist bezüglich der Fehlersicherheit ein System, das sich nur dadurch unterscheidet, daß 'A1' anstelle der Vorderachse die Hinterachse und entsprechend 'A2' nicht die Hinterachse sondern die Vorderachse bezeichnet, die gleichen Eigenschaften auf und ist daher von diesem Gesichtspunkt aus ebenso realisierbar.

Ist gemäß den Ansprüchen 17 und 18 die Antriebseinrichtung an den Rädern wenigstens einer Achse des Fahrzeugs unabhängig von den anderen Antriebseinrichtungen so kann auch durch unterschiedliche Antriebsleistung an beiden Fahrzeugseiten ein Giermoment erzeugt werden, wodurch ein Ausfall eines Lenkstellers analog zur Kompensation durch eine Bremsfunktion durchgeführt werden kann. Dadurch wird die Fehlersicherheit bezüglich des Ausfalls von Lenkstellern oder Bremsstellern noch erhöht, der Ausfall einer größeren Anzahl von Einzelkomponenten kann zumindest so kompensiert werden, daß ein beherschbarer Fahrzeugzustand bis zum Erreichen des sicheren Zustands gewährleistet ist.

Über das Auftreten eines Fehlers im Brems- und Lenkungssystem ist der Fahrer zu informieren, so daß dieser zur Behebung des Fehlers eine Werksatt aufsuchen kann.

Die Fig. 2 zeigt in Form eines Schemas, die gesamte Anordnung des erfindungsgemäßen Brems- und Lenksystems. Dabei sind die Stellsysteme an den Rädern als Module M1 bis M4 dargestellt, wobei jedem Rad ein Modul zugeordnet ist. Jedes der Module umfaßt die Stellglieder, die dem entsprechenden Rädern zugeordnet sind. Ein Beispiel für ein Modul ist in der Fig. 3 dargestellt. Die Versorgung des Fahrzeugs mit elektrischer Energie wird nachfolgend als Fahrzeugbatterie 1 bezeichent. Es handelt sich dabei nicht nur um eine Fahrzeugbatterie, sondern in der Regel um das Gesamtsystem Fahrzeugbatterie und Generator. Die Fahrzeugbatterie 1, die abweichend von der zeichnerischen Darstellung auch redundant ausgeführt werden kann, dient sowohl den Modulen Ml bis M4 als Energieversorgung als auch der Recheneinheit 3. Die Recheneinheit 3 ist mit dem fehlertoleranten Kommunikationssystem 2, das hier als redundant ausgeführter Datenbus schematisch dargestellt ist, verbunden. Dabei ist bei der redundanten Ausführung zu beachten, daß nicht wie hier dargestellt, eine parallele Verlegung der Datenbuskabel stattfindet, sondern daß möglichst getrennte Verlegewege gewählt werden. Die Recheneinheit 3 besteht gemäß der dargestellten Ausführung aus drei gleiche Rechenwerken 4, 5 und 6. Der Recheneinheit werden die von Sensoren gemessenen Größen beispielsweise des Lenkwinkels (des Lenkrades) α, der Stellung des Gaspedals (Sg), der Stellung des Bremspedals (Sb), des Schwimmwinkels β, der Raddrehzahlen ωᵢ und der Fahrzeuggeschwindigkeit v zugeführt. Nachdem in den drei Rechenwerken 4, 5, 6 die gleichen Algorithmen durchgeführt werden, stimmen im fehlerfreien Betrieb die ermittelten Sollwerte überein. Beim Auftreten eines Fehlers in einem der Rechenwerke weichen die in diesem Rechenwerk ermittelten Ergebnisse von den in den beiden anderen Rechenwerken ermittelten Ergebnissen ab. Somit kann erkannt werden, ob und in welchem der Rechenwerke ein Fehler aufgetreten ist. Das entsprechende Rechenwerk wird nachfolgend solange nicht mehr berücksichtigt, bis eine Überprüfung oder eine Reparatur ausgeführt wurde. Ein kurzzeitiges Abweichen der Ergebnisse (z.B. weniger als 0,1 s) muß dabei nicht unbedingt als Fehler gewertet werden, sofern die Ergebnisse anschließend wieder über eine längeren Zeitraum hinweg übereinstimmen. Sind die Rechenwerke fail-silent, genügt eine einfache Redundanz, d.h. eine zweikanalige Ausführung um die Fehlertoleranz zu erreichen. Die fehlertolerante Energieversorgung wird einerseits durch die Verbindung mit der Fahrzeugbatterie 1 und andererseits durch jeweils einen in dem Radmodul angeordneten weiteren Energiespeicher sichergestellt.

Die Fig. 3 zeigt die Darstellung der Elemente an Hand des Moduls M1 der Fig.2. Die Energieversorgung des Moduls erfolgt einerseits über den Anschluß an die Fahrzeugbatterie 1, die Redundanz wird durch den Energiespeicher 8 hergestellt. Die im Energiespeicher 8 eingespeiste Energie wird entweder über das Bordnetz und somit von der Lichtmaschine zugeführt. Andererseits ist es möglich, sich von der Lichtmaschine abzukoppeln, indem eine Rekuperationsbremse 9 zumindest teilweise als Betriebsbremse genutzt wird. Sobald der Energiespeicher 8 gefüllt ist, kann zusätzliche erzeugte Energie in das Bornetz eingespeist werden und damit entweder die Recheneinheit 3 mit Energie versorgt werden oder die Fahrzeugbatterie 1 geladen werden. Somit kann die Fahrzeugbatterie 1 auch beim Ausfall der Lichtmaschine geladen werden, da andere Spannungsquellen im Fahrzeug zur Verfügung stehen. Alternativ oder zusätzlich zu der Rekuperationsbremse kann an dem Rad dem das Modul zugeordnet ist, ein Wandler 9 angeordnet sein. Der Wandler wandelt die kinetische Energie des Rades in eine speicherbare Energieform um und speist den Energiespeicher 8 und eventuell die Fahrzeugbatterie 1. Weist sowohl der Energiespeicher 8 als auch die Fahrzeugbatterie 1 einen genügenden Ladezustand auf, so kann der Wandler 9 abgekoppelt werden. Der Wandler 9 kann beispielsweise ein Generator zur Erzeugung elektrischer Energie oder eine Pumpe zu Erzeugung einer Druckdifferenz sein. Der Energiespeicher 8 ist dem entsprechend entweder ein Akkumulator oder ein Druckspeicher. Gegebenenfalls kann auch die Energie der Bewegung des Rades relativ zur Fahrzeugkarosserie und in Richtung der Hochachse des Fahrzeugs gewandelt und gespeichert werden.

Das dargestellte Modul M1 ist nicht nur zur Ausführung einer Bremsfunktion und einer Lenkfunktion geeignet, es ist auch zur Durchführung einer Antriebsfunktion und einer aktiven Federungsfunktion ausgestaltet. Die Sollwerte (Sollenkwinkel, Sollbremswirkung, Sollfederwege und Sollantriebswirkung) aufgrund derer diese Funktionen durchgeführt werden und gegebenenfalls Sensorsignale werden dem Radmodul M1 über die fehlertolerante Kommunikationseinrichtung, den Datenbus 2, zugeführt. In einem Steuerrechner 7 werden aufgrund der übermittelten Sollwerte die Stellgrößen ermittelt. Dabei kann es sich bei der Ermittlung der Stellgrößen sowohl um eine Steuerung als um eine Regelung handeln. Aufgrund der übermittelten Sollbremswirkung wird die Betriebsbremse betrieben. Soll eine Bremsung stattfinden, so kann zunächst über die Rekuperationsbremse 9 eine Bremswirkung erzeugt. Ist die so erzeugte Bremswirkung nicht ausreichend, so wird als weiterer Teil der Betriebsbremse eine Scheibenbremse 12 benutzt, wobei der Bremsdruck z.B. durch eine hydraulische Druckquelle 10 erzeugt wird und in die Radbremszylinder 11 eingespeist wird.

Ist eine Rekuperationsbremse 9 nicht vorhanden, so dient allein die hydraulische Scheibenbremse 12 als Betriebsbremse. Der erzeugte Bremsdruck wird durch den Steuerrechner 7 bestimmt. Ebenso wird zur Steuerung bzw. Regelung der Bremswirkung der Rekuperationsbremse 9 der von ihr erzeugte Strom von dem Steuerrechner 7 bestimmt.

Zur Durchführung der aktiven Federungsfunktion (aktive und/oder teilaktive Federung) wird aufgrund des ermittelten Sollfederwegs die diesem Rad zugeordnete Federung gesteuert. Dazu werden die verstellbaren Federelemente 13 des Rads entsprechend mit Druck aus der hydraulischen Druckquelle 14 versorgt.

Dabei kann das Radmodul eine einzige hydraulische Druckquelle und gegebenenfalls einen lokalen Druckspeicher aufweisen, wobei im Betrieb des Moduls der Steuerrechner 7 über Steuerventile die Druckzufuhr zu einzelnen druckbetriebenen Stellgliedern steuert.

Zur Durchführung der Lenkungsfunktion dienen die Lenksteller 15, 16, die über das Lenkgestänge 18 an dem entsprechenden Rad angreifen. Der zu erzeugende Lenkwinkel des Rades wird aufgrund der Sollenkwirkung und dem Ist-Lenkwinkel in dem Steuerrechner 17 bestimmt und von den Steuereinheiten 17, 17' gesteuert über die Lenksteller 15, 16 erzeugt.

Die Antriebsfunktion wird aufgrund der dem Steuerrechner 7 übermittelten Sollantriebswirkung durchgeführt. Aufgrund der Sollantriebswirkung und des tatsächlichen Antriebsmoments wird der Radnabenmotor 19 über das Leistungssteuergerät 20 gesteuert. Die Antriebsenergie für den Radnabenmotor 19 stammt aus einer Antriebsbatterie 21, die entweder gleichzeitig das Bordnetz versorgt, oder die von dem Bordnetz vollkommen unabhängig ist.

Die Module sind vorzugsweise so aufgebaut, daß die einzelnen Stellglieder an dem entsprechenden Rad oder, wenn über ein Modul beide Räder einer Achse beaufschlagt werden, an der entsprechenden Achse angeordnet sind. In möglichst großer Nähe zu den Stellgliedern sind der Steuerrechner 7, der Energiespeicher 8, die hydraulische Druckquellen 10, 14, die Steuereinheiten 17, 17' und das Leistungssteuergerät 20 in einem gemeinsamen Modulgehäuse angeordnet. Das Modulgehäuse schützt die Elemente des Moduls vor den Umwelteinflüssen. Gleichzeitig bildet das Modulgehäuse mit seinem Inhalt die kleinste austauschbare Einheit, sofern in einem seiner Elemente ein Fehler auftritt. Dadurch wird eine große Vereinfachung in der Montage des Fahrzeugs, in der Lagerhaltung für Ersatzteile und in der Reparatur erreicht.

## Patentansprüche

1. Fahrzeug mit
- einem Brems- und Lenksystem, wobei das Fahrzeug mindestens zwei Achsen (A1,A2) aufweist und das Brems- und Lenksystem an jeder Achse für jedes Rad eine Bremsfunktion und an zumindest einer Achse eine Lenkfunktion ausübt, und
- mindestens einer Recheneinheit (3), in der für jedes Rad eine Sollbremswirkung und für jedes Rad mit Lenkfunktion eine Sollenkwirkung aufgrund von Sensorsignalen (Sb, Sg, v, ωᵢ, α, β) ermittelt wird, wobei die Bremsfunktion und die Lenkfunktion aufgrund der ermittelten Sollbremswirkung und Sollenkwirkung mittels Stellsystemen des Brems- und Lenksystems geregelt bzw. gesteuert wird, die für die Bremsfunktion eine Betriebsbremse (11) und für die Lenkfunktion zusätzlich einen Lenksteller (15, 16) beinhalten,
**dadurch gekennzeichnet, daß**
- die Recheneinheit (3) fehlertolerant, vorzugsweise redundant, ausgelegt ist,
- die Stellsysteme mittels einer fehlertoleranten Kommunikationseinrichtung (2) mit der Recheneinheit (3) verbunden sind und
- eine fehlertolerante Energieversorgung für die Stellsysteme und die Recheneinheit (3) vorgesehen ist.

2. Fahrzeug nach Anspruch 1,
**dadurch gekennzeichnet, daß**
jedes Rad zumindest einer der Achsen (A1, A2), an denen eine Lenkfunktion durchgeführt wird, jeweils mit einem unabhängig von den anderen Lenkstellern arbeitenden Lenksteller (Lr1, ..., Lr10) wirkverbunden ist.

3. Fahrzeug nach Anspruch 1 oder 2,
**dadurch gekennzeichnet, daß**
die Räder zumindest einer der Achsen (A1,A2), an der eine Lenkfunktion durchgeführt wird, mit einem gemeinsamen Lenksteller (La1, La2, La3) wirkverbunden sind.

4. Fahrzeug nach einem der Ansprüche 1 bis 3,
**dadurch gekennzeichnet, daß**
es wenigstens zwei unabhängig voneinander arbeitende, mit verschiedenen Rädern wirkverbundene Lenksteller aufweist.

5. Fahrzeug nach einem der Ansprüche 1 bis 4,
**dadurch gekennzeichnet, daß**
die Räder zumindest einer der Achsen (A1, A2) jeweils mit einer unabhängig von den anderen Betriebsbremsen arbeitenden Betriebsbremse (Br1, ..., Br8) wirkverbunden sind.

6. Fahrzeug nach einem der Ansprüche 1 bis 5,
**dadurch gekennzeichnet, daß**
zwischen den Betriebsbremsen (Ba1, ..., Ba6) der Räder zumindest einer der Achsen (A1, A2) ein funktionaler Zusammenhang - insbesondere eine gemeinsame Bremsdruckquelle - besteht.

7. Fahrzeug nach einem der Ansprüche 1 bis 6,
**dadurch gekennzeichnet, daß**
es wenigstens zwei unabhängig voneinander arbeitende, mit Rädern verschiedener Achsen wirkverbundene Betriebsbremsen aufweist.

8. Fahrzeug nach Anspruch 5,
**dadurch gekennzeichnet, daß**
die Räder der Achsen (A1, A2), an denen eine Lenkfunktion durchgeführt wird, mit unabhängig von anderen Betriebsbremsen arbeitenden Betriebsbremsen (Br1, ..., Br8) wirkverbunden sind.

9. Fahrzeug nach Anspruch 8,
**dadurch gekennzeichnet, daß**
die Räder der Achsen, an denen keine Lenkfunktion ausgeführt wird, mit Betriebsbremsen (Ba1, ..., Ba6) wirkverbunden sind, die in einem funktionalen Zusammenhang - insbesondere in Verbindung mit einer gemeinsamen Bremsdruckquelle - zueinander stehen.

10. Fahrzeug nach Anspruch 1,
**dadurch gekennzeichnet, daß**
die fehlertolerante Energieversorgung aus einer Fahrzeugbatterie (1) und zumindest einem weiteren Energiespeicher (8) im Fahrzeug besteht, wobei die dem einzelnen Rad zugeordneten Stellsysteme durch zumindest zwei voneinander unabhängige Speicher für Energie versorgt sind.

11. Fahrzeug nach Anspruch 10,
**dadurch gekennzeichnet, daß**
jedem Stellsystem für die Bremsfunktion (Br1, ..., Br8, Ba1, ..., Ba6) ein von den anderen Energiespeichern unabhängiger Energiespeicher (8) zugeordnet ist.

12. Fahrzeug nach Anspruch 11,
**dadurch gekennzeichnet, daß**
der Energiespeicher (8), der das Stellsystem für die Bremsfunktion eines bestimmten Rades einer Achse (A1, A2), an der eine Lenkfunktion durchgeführt wird, versorgt, auch das Stellsystem (Lr1, ..., Lr10, La1, La2, La3) für die Lenkfunktion, das diesem Rad zugeordnet ist, versorgt.

13. Fahrzeug nach einem der Ansprüche 10 bis 12,
**dadurch gekennzeichnet, daß**
die Energiespeicher (8), die einem einzelnen Rad zugeordnet sind, zumindest teilweise durch bei Bremsvorgängen aus der Bewegungsenergie des entsprechenden Rades zurückgewonnene elektrischen Energie aufgeladen werden.

14. Fahrzeug nach einem der Ansprüche 10 bis 12,
**dadurch gekennzeichnet, daß**
zumindest ein Energiespeicher (8) aus der kinetischen Energie eines Rades aufladbar ist.

15. Fahrzeug nach Anspruch 1,
**dadurch gekennzeichnet, daß**
für jedes Rad eine aktive Federungsfunktion - insbesodere mittels einer aktiven oder teilaktiven Federung - durchgeführt wird, wobei in der Recheneinheit für jedes Rad Sollfederwege aufgrund von Sensorsignalen ermittelt werden, wobei die aktive Federungsfunktion aufgrund der ermittelten Sollfederwege mittels Federstellern (13) geregelt bzw. gesteuert wird.

16. Fahrzeug nach Anspruch 1,
**dadurch gekennzeichnet, daß**
zumindest für die Räder einer Achse (A1, A2) des Fahrzeugs eine Antriebsfunktion mittels einer - insbesondere elektrischen - Antriebseinrichtung (19) durchgeführt wird, wobei in der Recheneinrichtung (7) für die Räder mit Antriebsfunktion eine Sollantriebswirkung ermittelt wird und wobei die Antriebsfunktion aufgrund der ermittelten Sollantriebswirkung gesteuert bzw. geregelt ist.

17. Fahrzeug nach Anspruch 16,
**dadurch gekennzeichnet, daß**
an zumindest einer der Achsen (A1, A2) mit Antriebsfunktion für jedes Rad eine von den anderen Antriebseinrichtungen unabhängige Antriebseinrichtung (19) angeordnet ist.

18. Fahrzeug nach Anspruch 16 oder 17,
**dadurch gekennzeichnet, daß**
an zumindest einer der Achsen (A1, A2) mit Antriebsfunktion eine auf beide Räder der Achse gleich einwirkende Antriebseinrichtung angeordnet ist.

19. Fahrzeug nach einem der Ansprüche 1 bis 18,
**dadurch gekennzeichnet, daß**
die einem bestimmten Rad zugeordneten Stellsysteme sowie die zugehörige Steuerung (7) sowie der ausschließlich dieses Rad versorgende weitere Energiespeicher (8) zu einem Modul (M1, M2, M3, M4) zusammengefaßt sind.

20. Fahrzeug nach einem der Ansprüche 1 bis 18,
**dadurch gekennzeichnet, daß**
die allen Rädern einer bestimmten Achse (A1, A2) zugeordneten Stellsysteme sowie die zugehörige Steuerung sowie der ausschließlich diese Achse versorgende weitere Energiespeicher zu einem Modul zusammengefaßt sind.

21. Fahrzeug nach einem der Ansprüche 1 bis 20,
**dadurch gekennzeichnet, daß**
das fehlertolerante Kommunikationssystem (2) ein Datenbus ist.

22. Fahrzeug nach Anspruch 21,
**dadurch gekennzeichnet, daß**
der Datenbus (2) redundant ausgebildet ist.

23. Fahrzeug nach Anspruch 21,
**dadurch gekennzeichnet, daß**
der Datenbus (2) als Ring oder als Stern ausgebildet ist.

24. Fahrzeug nach einem der Ansprüche 1 bis 23,
**dadurch gekennzeichnet, daß**
die fehlertolerante Recheneinheit (3) aus zumindest drei, unabhängig voneinander arbeitenden, identischen Rechenwerken (4,5,6) besteht, auf denen unabhängig voneinander aufgrund der allen Rechenwerken (4,5,6) zugeführten Sensorsignalen zumindest die Sollbremswirkung und die Sollenkwirkung ermittelt wird.

25. Fahrzeug nach einem der Ansprüche 1 bis 23
**dadurch gekennzeichnet, daß**
die fehlertolerante Recheneinheit (3) aus zumindest zwei unabhängig voneinander arbeitenden Rechenwerken (4,5,6) besteht, wobei jedes der Rechenwerke (4,5,6) die Fail-silent Eigenschaft aufweist und wobei in jedem der Rechenwerke (4,5,6) unabhängig voneinander aufgrund der allen Rechenwerken (4,5,6) zugeführten Sensorsignalen zumindest die Sollbremswirkung und die Sollenkwirkung ermittelt wird.

## Claims

1. Vehicle having
- a braking and steering system, the vehicle having at least two axles (A1, A2) and the braking and steering system performing a braking function on each axle for each wheel and a steering function on at least one axle, and
- at least one computing unit (3), in which a desired braking effect is determined for each wheel and a desired steering effect is determined for each wheel with a steering function, in each case in response to sensor signals (Sb, Sg, v, ωᵢ, α, *β*), the braking function and the steering function being regulated or controlled by means of adjusting systems of the braking and steering system on the basis of the determined desired braking effect and desired steering effect, which adjusting systems contain a service brake (11) for the braking function and additionally a steering adjuster (15, 16) for the steering function,
characterized in that
- the computing unit (3) is designed to be fault-tolerant, preferably redundant,
- the adjusting systems are connected to the computing unit (3) by means of a fault-tolerant communication device (2), and
- a fault-tolerant energy supply is provided for the adjusting systems and the computing unit (3).

2. Vehicle according to Claim 1, characterized in that each wheel of at least one of the axles (A1, A2), on which a steering function is performed, is operatively connected in each case to a steering adjuster (Lr1, ..., Lr10) working independently of the other steering adjusters.

3. Vehicle according to Claim 1 or 2, characterized in that the wheels of at least one of the axles (A1, A2), on which a steering function is performed, are operatively connected to a common steering adjuster (La1, La2, La3).

4. Vehicle according to one of Claims 1 to 3, characterized in that it has at least two steering adjusters working independently of one another and operatively connected to various wheels.

5. Vehicle according to one of Claims 1 to 4, characterized in that the wheels of at least one of the axles (A1, A2) are operatively connected in each case to a service brake (Br1, ..., Br8) working independently of the other service brakes.

6. Vehicle according to one of Claims 1 to 5, characterized in that there is a functional relationship, particularly a common brake-pressure source, between the service brakes (Ba1, ..., Ba6) of the wheels of at least one of the axles (A1, A2).

7. Vehicle according to one of Claims 1 to 6, characterized in that it has at least two service brakes working independently of one another and operatively connected to wheels of various axles.

8. Vehicle according to Claim 5, characterized in that the wheels of the axles (A1, A2), on which a steering function is performed, are operatively connected to service brakes (Br1, ..., Br8) working independently of other service brakes.

9. Vehicle according to Claim 8, characterized in that the wheels of the axles, on which no steering function is performed, are operatively connected to service brakes (Ba1, ..., Ba6) which are in a functional relationship with one another, in particular connected to a common brake-pressure source.

10. Vehicle according to Claim 1, characterized in that the fault-tolerant energy supply in the vehicle consists of a vehicle battery (1) and of at least one further energy accumulator (8), the adjusting systems are assigned to the individual wheel being supplied by at least two energy accumulators independent of one another.

11. Vehicle according to Claim 10, characterized in that to each adjusting system for the braking function (Br1, ..., Br8, Ba1, ..., Ba6) is assigned an energy accumulator (8) independent of the other energy accumulators.

12. Vehicle according to Claim 11, characterized in that the energy accumulator (8) which supplies the adjusting system for the braking function of a specific wheel of an axle (A1, A2), on which a steering function is performed, also supplies the adjusting system (Lr1, ..., Lr10, La1, La2, La3) for the steering function, which adjusting system is assigned to this wheel.

13. Vehicle according to one of Claims 10 to 12, characterized in that the energy accumulators (8), which are assigned to an individual wheel, are charged at least partially by electrical energy recovered during braking operations from the kinetic energy of the corresponding wheel.

14. Vehicle according to one of Claims 10 to 12, characterized in that at least one energy accumulator (8) can be charged from the kinetic energy of a wheel.

15. Vehicle according to Claim 1, characterized in that an active suspension function is performed for each wheel, in particular by means of an active or partly active suspension, desired spring excursions being determined for each wheel in the computing unit in response to sensor signals, the active suspension function being regulated or controlled by means of spring adjusters (13) on the basis of the desired spring excursions determined.

16. Vehicle according to Claim 1, characterized in that a drive function is performed by means of an especially electrical drive device (19) at least for the wheels of one axle (A1, A2) of the vehicle, a desired drive effect being determined in the computing unit (7) for the wheels having a drive function, and the drive function being controlled or regulated on the basis of the desired drive effect determined.

17. Vehicle according to Claim 16, characterized in that a drive device (19) independent of the other drive devices is arranged for each wheel on at least one of the axles (A1, A2) having a drive function.

18. Vehicle according to Claim 16 or 17, characterized in that a drive device acting equally on both wheels of the axle is arranged on at least one of the axles (A1, A2) having a drive function.

19. Vehicle according to one of Claims 1 to 18, characterized in that the adjusting systems assigned to a specific wheel and the associated control (7) as well as the further energy accumulator (8) solely supplying this wheel are combined to form a module (M1, M2, M3, M4).

20. Vehicle according to one of Claims 1 to 18, characterized in that the adjusting systems assigned to all the wheels of a specific axle (A1, A2) and the associated control as well as the further energy accumulator solely supplying this axle are combined to form a module.

21. Vehicle according to one of Claims 1 to 20, characterized in that the fault-tolerant communication system (2) is a data bus.

22. Vehicle according to Claim 21, characterized in that the data bus (2) is designed redundantly.

23. Vehicle according to Claim 21, characterized in that the data bus (2) is designed as a ring or as a star.

24. Vehicle according to one of Claims 1 to 23, characterized in that the fault-tolerant computing unit (3) consists of at least three identical computing devices (4, 5, 6) which work independently of one another and on which at least the desired braking effect and the desired steering effect are determined independently of one another in response to the source signals fed to all the computing devices (4, 5, 6).

25. Vehicle according to one of Claims 1 to 23, characterized in that the fault-tolerant computing unit (3) consists of at least two computing devices (4, 5, 6) working- independently of one another, each of the computing devices (4, 5, 6) having the fail-silent property, and at least the desired braking effect and the desired steering effect being determined independently of one another in each of the computing devices (4, 5, 6) in response to the sensor signals fed to all the computing devices (4, 5, 6).

## Revendications

1. Véhicule muni
- d'un système de freinage et de direction, le véhicule présentant au moins deux essieux (A1, A2) et le système de freinage et de direction, sur chaque essieu, pour chaque roue, exerçant une fonction de freinage et, sur au moins un essieu, une fonction de direction, et
- au moins une unité de calcul (3) dans laquelle, pour chaque roue, un effet de consigne de freinage et, pour chaque roue munie d'une fonction de direction, un effet de braquage consigne est déterminé sur la base de signaux de capteur (Sb Sg, v, ωᵢ, α, β), la fonction de freinage et la fonction de direction étant régulées ou commandées sur la base de l'effet de consigne de freinage et de l'effet de braquage consigne déterminés, au moyen de systèmes actionneurs, appartenant au système de freinage et de direction, qui contiennent, pour la fonction de freinage, un frein de fonctionnement (11) et, pour la fonction de direction, à titre supplémentaire, un actionneur de direction (15, 16),
caractérisé en ce que
- l'unité de calcul (3) est, de par sa conception, à tolérance de panne, de préférence redondante,
- les systèmes actionneurs sont reliés à l'unité de calcul (3), au moyen d'un dispositif de communication (2) à tolérance de panne, et
- une alimentation en énergie à tolérance de panne est prévue pour les systèmes actionneurs et l'unité de calcul (3).

2. Véhicule selon la revendication 1, caractérisé en ce que chaque roue d'un des essieux (A1, A2), sur lesquels est effectuée une fonction directionnelle, est reliée fonctionnellement à un actionneur directionnel (Lr1, ..., Lr10) travaillant indépendamment des autres actionneurs directionnels.

3. Véhicule selon la revendication 1 ou 2, caractérisé en ce que les roues d'au moins l'un des essieux (A1, A2), sur lequel est effectuée une fonction directionnelle, sont reliées fonctionnellement à un actionneur directionnel commun (La1, La2, La3).

4. Véhicule selon l'une des revendications 1 à 3, caractérisé en ce qu'il présente au moins deux actionneurs directionnels, reliés fonctionnellement à des roues différentes, travaillant indépendamment les uns des autres.

5. Véhicule selon l'une des revendications 1 à 4, caractérisé en ce que les roues d'au moins l'un des essieux (A1, A2) sont reliées fonctionnellement à un frein de fonctionnement (Br1, ..., Br8) travaillant indépendamment des autres freins de fonctionnement.

6. Véhicule selon l'une des revendications 1 à 5, caractérisé en ce qu'entre les freins de fonctionnement (Ba1, ..., Ba6) des roues d'au moins l'un des essieux (A1, A2) est constituée une liaison fonctionnelle - en particulier une source de pression de freinage commune.

7. Véhicule selon l'une des revendications 1 à 6, caractérisé en ce qu'il présente au moins deux freins de fonctionnement reliés fonctionnellement à des roues appartenant à des essieux différents, travaillant indépendamment les uns des autres.

8. Véhicule selon la revendication 5, caractérisé en ce que les roues des essieux (A1, A2), sur lesquelles est effectuée une fonction directionnelle, sont reliées fonctionnellement à des freins de fonctionnement (Br1, ..., Br8) travaillant indépendamment des autres freins de fonctionnement.

9. Véhicule selon la revendication 8, caractérisé en ce que les roues des essieux, sur lesquelles n'est effectuée aucune fonction directionnelle, sont reliées fonctionnellement à des freins de fonctionnement (Ba1, ..., Ba6) qui sont placés en liaison fonctionnelle les uns par rapport aux autres - en particulier en liaison avec une source de pression de freinage commune.

10. Véhicule selon la revendication 1, caractérisé en ce que l'alimentation en énergie à tolérance de panne est constituée d'une batterie de véhicule (1) et d'au moins un autre accumulateur d'énergie (8) installé dans le véhicule, les systèmes actionneurs, associés à la roue spécifique, étant alimentés par au moins deux accumulateurs d'énergie indépendants l'un de l'autre.

11. Véhicule selon la revendication 10, caractérisé en ce qu'à chaque système actionneur prévu pour la fonction de freinage (Br1, ..., Br8, Ba1, ..., Ba6) est associé un accumulateur d'énergie (8) indépendant des autres accumulateurs d'énergie.

12. Véhicule selon la revendication 11, caractérisé en ce que l'accumulateur d'énergie (8), qui alimente le système actionneur prévu pour la fonction de freinage d'une roue déterminée d'un des essieux (A1, A2) sur lequel est effectuée une fonction directionnelle, alimente également le système actionneur (Lr1, ..., Lr10; La1, La2, La3) prévu pour la fonction directionnelle, associé à cette roue.

13. Véhicule selon l'une des revendications 10 à 12, caractérisé en ce que les accumulateurs d'énergie (8) associés à une roue spécifique sont chargés au moins partiellement au moyen de l'énergie électrique, récupérée à partir de l'énergie cinématique de la roue correspondante lors des processus de freinage.

14. Véhicule selon l'une des revendications 10 à 12, caractérisé en ce qu'au moins un accumulateur d'énergie (8) est susceptible d'être chargé à partir de l'énergie cinétique d'une roue.

15. Véhicule selon la revendication 1, caractérisé en ce que pour chaque roue est effectuée une fonction de suspension active - en particulier au moyen d'une suspension active ou partiellement active -, des courses de débattement élastiques de consigne étant déterminées pour chaque roue dans l'unité de calcul, en se basant sur des signaux de capteur, la fonction de suspension active étant régulée et/ou commandée d'après les courses de débattement élastiques de consigne ayant été déterminées, au moyen d'actionneurs élastiques (13).

16. Véhicule selon la revendication 1, caractérisé en ce qu'au moins pour les roues d'un essieu (A1, A2) du véhicule est effectuée une fonction d'entraînement, au moyen d'un dispositif d'entraînement (19) - en particulier électrique -, un effet d'entraînement de consigne étant déterminé dans le calculateur (7) pour les roues ayant une fonction d'entraînement et la fonction d'entraînement étant commandée et/ou régulée en se basant sur l'effet d'entraînement de consigne déterminé.

17. Véhicule selon la revendication 16, caractérisé en ce que, sur au moins un des essieux (A1, A2) muni d'une fonction d'entraînement pour chaque roue, est installé un dispositif d'entraînement (19), indépendant des autres dispositifs d'entraînement.

18. Véhicule selon la revendication 16 ou 17, caractérisé en ce que en au moins l'un des essieux (A1, A2) muni d'une fonction d'entraînement, est disposé un dispositif d'entraînement agissant de façon identique sur les deux roues de l'essieu.

19. Véhicule selon l'une des revendications 1 à 18, caractérisé en ce que les systèmes actionneurs associés à une roue déterminée, ainsi que la commande (7) afférente, ainsi que l'accumulateur d'énergie (8) supplémentaire alimentant exclusivement cette roue, sont regroupés en un module (M1, M2, M3, M4).

20. Véhicule selon l'une des revendications 1 à 18, caractérisé en ce que les systèmes actionneurs associés à toutes les roues d'un essieu (A1, A2) déterminé, ainsi que la commande afférente, ainsi que l'accumulateur en énergie supplémentaire alimentant exclusivement cet essieu, sont regroupés en un module.

21. Véhicule selon l'une des revendications 1 à 20, caractérisé en ce que le système de communication (2) à tolérance de panne est un bus de données.

22. Véhicule selon la revendication 21, caractérisé en ce que le bus de données (2) est de nature redondante.

23. Véhicule selon la revendication 21, caractérisé en ce que le bus de données (2) est réalisé en anneau ou en étoile.

24. Véhicule selon l'une des revendications 1 à 23, caractérisé en ce que l'unité de calcul (3) à tolérance de panne est constituée d'au moins trois calculateurs (4, 5, 6) identiques, travaillant indépendamment les uns des autres, sur lesquels, indépendamment les uns des autres, est déterminé au moins l'effet de consigne de freinage et l'effet de consigne de braquage, en se basant sur les signaux de capteurs amenés à tous les calculateurs (4, 5, 6).

25. Véhicule selon l'une des revendications 1 à 23, caractérisé en ce que l'unité de calcul (3) à tolérance de panne est constituée d'au moins deux calculateurs (4, 5, 6) fonctionnant indépendamment les uns des autres, chacun des calculateurs (4, 5, 6) présentant une propriété fail-silent et, dans chacun des calculateurs (4, 5, 6), indépendamment les uns des autres, en se basant sur les signaux de capteur amenés à tous les calculateurs (4, 5, 6), étant déterminés au moins l'effet de consigne de freinage et l'effet de consigne de braquage.
